(19) Europäisches Patentamt
European Patent Office
Office européen des brevets

(11) **EP 1 930 878 A1**

(12) **EUROPEAN PATENT APPLICATION**

(43) Date of publication:
**11.06.2008 Bulletin 2008/24**

(51) Int Cl.:
***G10K 11/178*** (2006.01)     ***H04M 9/08*** (2006.01)

(21) Application number: **06125565.9**

(22) Date of filing: **07.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **SiTel Semiconductor B.V.
5215 MV 's-Hertogenbosch (NL)**

(72) Inventors:
• **Hiraga, Hiroshi
Yokohama City,
236-0045 Kanagawa (JP)**
• **Helsloot, Michiel A.
5231 HD, 's-Hertogenbosch (NL)**

(74) Representative: **van Westenbrugge, Andries
Nederlandsch Octrooibureau
Postbus 29720
2502 LS Den Haag (NL)**

(54) **Telephone device**

(57)     The invention relates to telephone device, comprising a processing unit arranged to receive a microphone signal from a microphone and a speaker signal from a line interface and is arranged to transmit the microphone signal to the line interface and the speaker signal to a speaker. The processing unit comprises a noise reduction finite impulse response filter and a noise reduction subtracter, the noise reduction finite impulse response filter being defined by a plurality of noise reduction parameters ($b_i$). The processing unit is arranged to transmit the microphone signal to the line interface and to the noise reduction finite impulse response filter. The output of the noise reduction finite impulse response filter is subtracted from the speaker signal (RX) as received from the line interface by noise reduction subtracter to cancel background noise present at the speaker.

*Fig 3*

**Description**

TECHNICAL FIELD

The invention relates to a telephone device, comprising a processing unit arranged to receive a microphone signal from a microphone and a speaker signal from a line interface and is arranged to transmit the microphone signal to the line interface and the speaker signal to a speaker.

STATE OF THE ART

Telephones are often used in situations with a lot of background noise. Especially mobile phones (cellular phones) are often used in trains, restaurants or working environments, in which a lot of background noise is present. However, also 'traditional' 'in-house telephones' are still commonly used for domestic or corporate purposes. To increase the user-friendliness, these telephones are often cordless telephones (portable telephones), for instance according to the Digital Enhanced Cordless Telecommunications ETSI-standard for digital cordless telephones and derivatives thereof. The specifications of such cordless telephones are known to a skilled person.

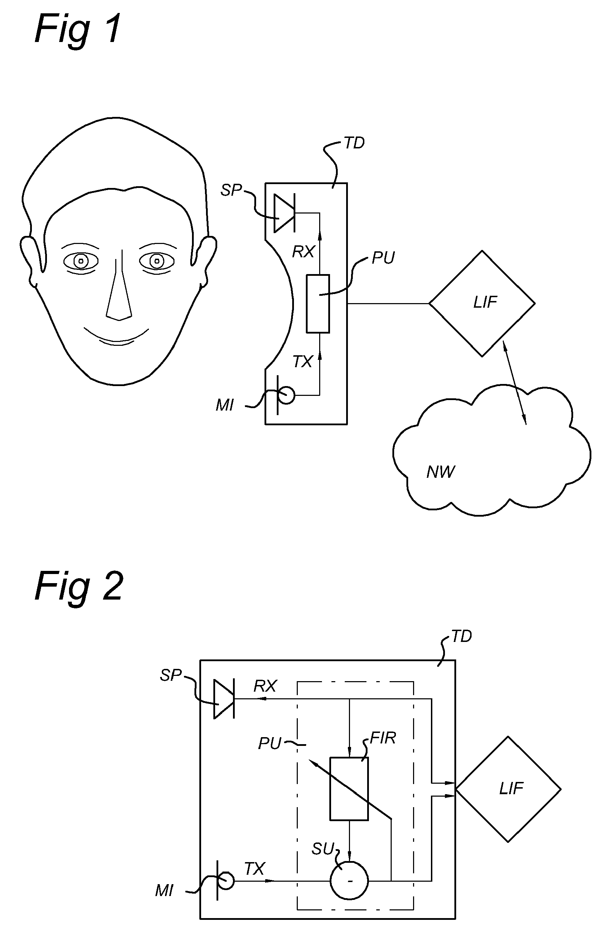

Fig. 1 schematically depicts a telephone device TD according to the prior art, comprising a microphone MI, speaker SP and a processing unit PU.

The microphone MI is arranged to detect sound, for instance speech, and transmit a microphone signal TX representing the detected sound to the processing unit PU. The processing unit PU is arranged to transmit this signal to a receiving party via a line interface LIF.

The processing unit PU is further arranged to receive a speaker signal RX via the line interface LIF and transmit this speaker signal RX to the speaker SP. The speaker SP is arranged to generate a sound signal based on the received speaker signal RX.

The line interface LIF may for instance interface a network NW, which may be the public switched telephone network (PSTN), Voice over IP (VoIP), (asymmetric) digital subscriber line ((A)DSL), integrated services digital network (ISDN).

The telephone device TD may be formed in many ways. For instance, the telephone device TD may comprise a processing unit PU which has a microphone MI and a speaker SP associated with it. The microphone MI and the speaker SP may be comprised by the telephone device TD, but may also comprise one or two remote components (remote microphone and/or speaker) arranged to communicate with the processing unit PU via a wireless or wired communication link (for instance using Bluetooth).

It will be understood that the telephone device TD may be arranged to carry out all kinds of suitable signal processing steps, such as analogue-to-digital conversion, digital-to-analogue conversion, filtering to increase the quality of the signal, etc.

Filtering may for instance be done to filter out background noise, for instance by filtering out energy from the microphone or speaker signal TX, RX that is outside the frequency band normally used for speech, such as very high or low frequency sounds. For instance, the filters may filter out all frequencies outside 300 - 3400 Hz (narrow band) or 100 - 7000 Hz (wide band). This may increase the intelligibility of the transmitted sound.

Such filtering techniques may increase the intelligibility of the acoustic signal produced by the speaker SP. However, the intelligibility of the sound as produced by the speaker SP is also negatively influenced by background noise present at the location of the speaker SP.

It is an object to further reduce the negative influence of the background noise.

SHORT DESCRIPTION

According to an aspect there is provided a telephone device, comprising a processing unit arranged to receive a microphone signal from a microphone and a speaker signal from a line interface and is arranged to transmit the microphone signal to the line interface and the speaker signal to a speaker, characterized in that the processing unit comprises a noise reduction finite impulse response filter and a noise reduction subtracter, the noise reduction finite impulse response filter being defined by a plurality of noise reduction parameters ($b_i$), wherein the processing unit is arranged to transmit the microphone signal to the line interface and to the noise reduction finite impulse response filter, wherein the output of the noise reduction finite impulse response filter is subtracted from the speaker signal as received from the line interface by noise reduction subtracter to cancel background noise present at the speaker.

SHORT DESCRIPTION OF THE DRAWINGS

Embodiments of the invention will now be described, by way of example only, with reference to the accompanying schematic drawings in which corresponding reference symbols indicate corresponding parts, and in which:

- Figure 1 schematically depicts a telephone device according to the prior art,
- Fig. 2 schematically depicts a telephone device according to the prior art in more detail,
- Fig. 3 and 4 schematically depict a part of a telephone device according to an embodiment.
Same reference numbers used in different figures refer to similar components.

DETAILED DESCRIPTION

Telephone devices TD often comprise the option to be used as speaker phones. When used as a speaker phone, the telephone device TD may further comprise an echo canceller to prevent acoustic feedback, as may occur when the microphone MI picks up the sound generated by the speaker SP. Such an echo canceller may comprise an acoustic feedback finite impulse response filter FIR. Finite impulse response filters are a type of digital filter, known to a skilled person and are defined by a number of acoustic feedback parameters. The output signal $y(n)$ of such an acoustic feedback finite impulse filter FIR at a time $n$, is the weighted sum of the input signal $x(n)$ at time $n$ and a predetermined number of 'older' input signals at times $n-1$ to $n-R$, where the acoustic feedback parameters of the acoustic feedback finite impulse response filter FIR are defined by acoustic feedback weighing factors $a_i$ of the acoustic feedback finite impulse response filter FIR of the weighted sum and where $R$ determines the order of the filter:

$$y(n) = \sum_{i=0}^{i=R} a_i x(n-i).$$

A more detailed view of such an echo canceller is schematically depicted in Fig. 2. Fig. 2 shows the telephone device TD according to Fig. 1, in which the processing unit PU is shown in more detail. It will however be understood that the processing unit PU is not shown in full detail and may comprise further functionality, such as a CODEC for performing analogue-to-digital conversion and vice versa.

The processor unit PU comprises an acoustic feedback finite impulse response filter FIR and an acoustic feedback subtracter SU.

The processor unit PU receives speaker signal RX via line interface LIF. The speaker signal RX is to be transmitted to speaker SP. The speaker SP generates a sound based on the speaker signal RX.

The sound generated by the speaker SP may be registered by the microphone MI. The microphone signal TX coming from the microphone MI entering the processing unit PU may now be comprised of two components:

$TX_{speech}$) sound that is to be transmitted via the line interface LIF (for instance speech from the user), and
$TX_{speaker}$) sound that is picked up from the speaker SP.

In order to prevent acoustic feedback, this second term is to be removed from the microphone signal TX. This removal can not simply be done by subtracting the incoming speaker signal RX from the microphone signal TX. Because the second term from the microphone signal $TX_{speaker}$ is not identical to the incoming speaker signal RX as a result of the acoustic path from the speaker SP to the microphone MI, causing delays, echos, deformations and the like.

Removal is done by splitting the incoming speaker signal RX in two parts, where one part of the speaker signal RX is input to the acoustic feedback finite impulse response filter FIR. The output of the acoustic feedback finite impulse response filter FIR is subtracted from the microphone signal TX using acoustic feedback subtracter SU. By subtracting the output of the acoustic feedback finite impulse response filter FIR from the microphone signal, sound picked up by the microphone MI from the speaker SP is cancelled.

The acoustic feedback parameters $a_i$ of the acoustic feedback finite impulse response filter FIR may be set in such a way that the deformation or linear distortion of the sound picked up by the microphone MI from the speaker SP due to the fact that it has travelled from the speaker SP to the microphone MI is accounted for. The deformation may include echos, delays, deformation of frequency spectrum etc.

The acoustic feedback parameters $a_i$ of the acoustic feedback finite impulse response filter FIR may be set on the spot by feeding back the output of the subtractor SU to the acoustic feedback finite impulse response filter FIR. This way, the acoustic feedback parameters $a_i$ of the acoustic feedback finite impulse response filter FIR may be optimized on the spot. The acoustic feedback finite impulse response filter FIR may therefore be regarded as a trained acoustic feedback finite impulse response filter FIR.

Therefore, it will be understood that the finite impulse response filters mentioned in this text, may also be referred to as adaptive finite impulse response filters. Of course, the finite impulse response filters may also be non-adaptive. The feedback parameters of the finite impulse response filter FIR may also be predetermined and be set during manufacturing of the telephone device TD.

The acoustic feedback parameters $a_i$ of the acoustic feedback finite impulse response filter FIR may be adjusted when no sound that is to be transmitted via the line interface LIF is present (so when the user doesn't speak), and the microphone signal TX mainly comprises the component picked up from the speaker $TX_{speaker}$. So, the adaptation freezes when speech is detected. When no speech is present, the acoustic feedback parameters $a_i$ of the acoustic feedback finite impulse response filter FIR may be set by minimizing the output of the acoustic feedback subtracter SU. An idle detector may be provided to determine whether or not sound that is to be transmitted via the line interface LIF is present.

It will be understood that idle detectors or voice activity detectors (VAD) are known and may be designed in many different ways. For instance, the voice activity detector may calculate a long time average (background noise estimation) and a short time average (active voice estimation) and it compares the signal levels together with some minimum thresholds. Using the short time average and the long time average, it can be determined whether or not the user actually speaks or not.

Other voice activity detectors VAD could make comparisons based on 'kurtosis' (measure for 'speech-likeness' of a signal) and other statistical characteristics, such as sparseness, which is a measure for the non-stationairy character of speech, i.e. short breaks during speech. It will be understood that many different voice activity detectors are known, and are therefore not described here in full detail.

It will be understood that the optimal acoustic feedback parameters $a_i$ of the acoustic feedback finite impulse response filter FIR depend on the acoustic path from the speaker SP to the microphone MI, and may be influenced by the shape of a head of the user, the orientation of the telephone device TD with respect to the head of the user, the room the telephone device TD is used in etc.

When the telephone device TD is in use, the speaker signal RX is transferred into an acoustic signal by speaker SP listened to by a user. In case the user is in an environment with background noise, he or she may experience trouble hearing the acoustic signal produced by the speaker SP. In case a user is not able to hear the acoustic signal very well, he or she may increase the volume of the speaker SP.

According to the embodiments described here, a different solution is provided to make the acoustic signal better hearable for the user himself by adding a component $RX_{anti-noise}$ to the speaker signal RX that cancels at least some of the background noise for the user. So, the speaker signal RX now comprises two components:

$RX_{speech}$) sound that is to transmitted via the line interface LIF to the telephone device TD (for instance speech from another end party), and

$RX_{anti-noise}$) sound representing the anti-phase of background noise as present near the speaker SP coming from a background noise source in the vicinity of the user that is to be cancelled.

The technique is included inside the telephone device TD and attempts to cancel background noise locally (for near-end party only). The user holding the telephone device TD equipped with this technique hears less background noise. As such, the perceived signal-to-noise ratio at the output of the speaker SP is improved.

In order to cancel background noise the telephone device TD needs to have knowledge about the background noise. This is done via the microphone MI that picks up this background noise.

The background noise is observed by the user at the location of the earpiece of the telephone device TD, i.e. near the speaker SP (ear pressed against the speaker SP of the telephone device TD), while the microphone MI picks up the background noise at the position of the microphone MI.

Therefore, the microphone signal TX can not simply be subtracted from the speaker signal RX. The background noise may be different at the position of the speaker SP than at position of the microphone MI, as the microphone MI is usually placed at an other position than the speaker SP, usually at a distance of approximately 5 - 15 cm. This will make it more difficult to accurately match the level, characteristic and phase of the environment noise at the earpiece location.

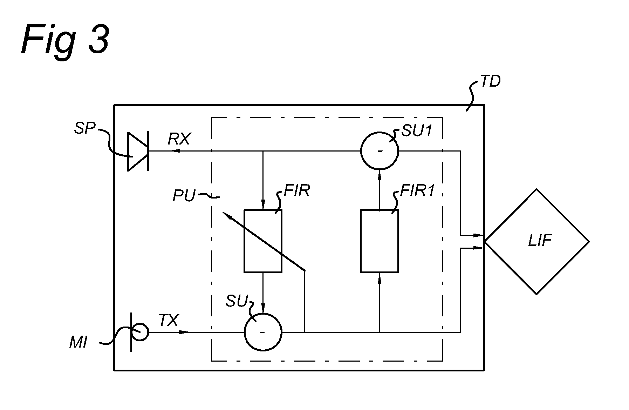

Therefore, according to an embodiment, the part of the microphone signal TX is subtracted from the speaker signal RX by a noise reduction subtracter SU1 after being processed by a noise reduction finite impulse response filter FIR1, as schematically depicted in Fig. 3. The working of finite impulse response filters is described in detail above with reference to Fig. 2.

The output signal u(n) of the noise reduction finite impulse response filter FIR1 at a time n, is the weighted sum of the input signal v(n) at time n and a predetermined number of 'older' input signals at times n-1 to n-S, where the noise reduction parameters of the noise reduction finite impulse response filter FIR1 are defined by noise reduction weighing factors $b_i$ of the noise reduction finite impulse response filter FIR1 of the weighted sum and where S determines the order of the filter:

$$u(n) = \sum_{i=0}^{i=S} b_i v(n-i).$$

The noise reduction parameters $b_i$ of the noise reduction finite impulse response filter FIR1 depend on the actual situation, as these represent the acoustic path from the microphone MI to the speaker SP, which may differ from situation to situation. Since the signal that is to be cancelled is not present in the speaker signal RX, but is only present in the environment of the speaker SP, the noise reduction parameters $b_i$ of the noise reduction finite impulse response filter FIR1 can not be trained by feeding back the output of the noise reduction subtracter SU1 and adjusting the noise reduction parameters $b_i$ of the noise reduction finite impulse response filter FIR1 to minimize the outcome of the noise reduction subtracter SU1.

So, in order to predict and cancel the background noise at the output of the speaker SP, some estimation is needed of the acoustic path from the speaker SP to the microphone MI, i.e. some estimation of the noise reduction parameters $b_i$ of the noise reduction finite impulse response filter FIR1 is needed.

This estimation may be obtained from the trained acoustic feedback finite impulse filter FIR present in the telephone device TD and discussed in more detail with reference to Fig. 2. According to an embodiment, it is assumed that the noise reduction parameters $b_i$ of the noise reduction finite impulse response filter FIR1 equal the acoustic feedback parameters $a_i$ of the trained acoustic feedback finite impulse response filter FIR:

$$a_i = b_i$$

$$b_i = f(a_i),$$

The order S of the noise reduction finite impulse response filter FIR1 may be equal to or less than the order R of the acoustic feedback finite impulse response filter FIR: $S \leq R$. The noise reduction finite impulse response filter FIR1 may be of a lower order to reduce costs.

The noise reduction finite impulse response filter FIR1 processes the microphone signal TX, comprising speech and background noise and subtracts the processed signal from the speaker signal RX. By doing this, anti-noise is created by the speaker SP for the background noise present near the speaker SP.

The noise reduction parameters $b_i$ of the noise reduction finite impulse response filter FIR1 are adapted such that the noise reduction finite impulse response filter FIR1 reproduces the background noise as it is likely to appear at the location of the speaker SP. The output of the noise reduction finite impulse response filter FIR1 is subtracted from the speaker signal RX, generating anti-noise that may cancel out the actual background noise.

The embodiments are based on the insight that a transfer function $H_{microphone-ear}$, describing the transfer of sound traveling from the microphone to the ear, is substantially equal to or related to a transfer function $H_{speaker-microphone}$, describing the transfer of sound traveling from the speaker SP to the microphone MI, when the telephone device TD is held near the head.

It will be understood that the noise reduction parameters $b_i$ of the noise reduction finite impulse response filter FIR1 may be set equal the acoustic feedback parameters $a_i$ of the trained acoustic feedback finite impulse response filter FIR, but that many alternatives may be conceived, such as an alternative in which the parameters are inversed:

$$b_i = \frac{1}{a_i}.$$

In fact, alternatives may be conceived. In general it will be understood that the embodiments described are based on the insight that a transfer function $H_{microphone-ear}$, describing the transfer of sound traveling from the microphone to the ear, is substantially related to a transfer function $H_{speaker-microphone}$, describing the transfer of sound traveling from the speaker SP to the microphone MI, when the telephone device TD is held near the head. So in fact, the noise reduction parameters $b_i$ of the noise reduction finite impulse response filter FIR1 are a function of the acoustic feedback parameters $a_i$ of the trained acoustic feedback finite impulse response filter FIR:

where $f(a_i)$ may for instance be $f(a_i) = a_i$ or $f(a_i) = (1/ a_i)$.

In situations where a lot of background noise is present, the user may automatically set the volume of the speaker SP at a high level. It will be understood that best results are obtained when the speaker SP responds in a linear way to adjustments of the volume level.

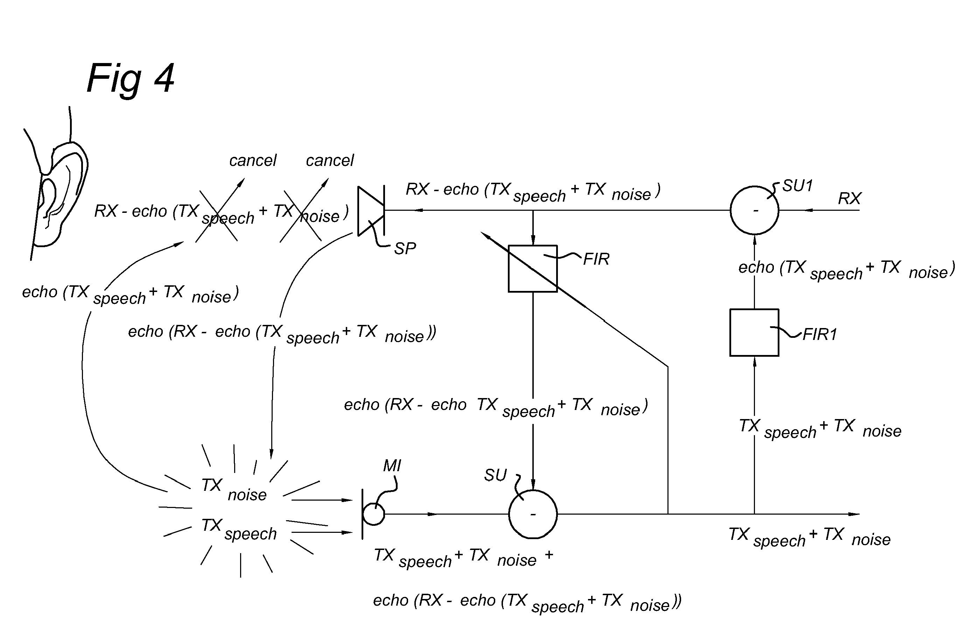

The embodiment shown in Fig. 3 is shown in more detail in Fig. 4, in which the signals carried by the different connections are added. The term echo(X) is used to indicate that a signal X is being transformed as a result of traveling an acoustic path for instance from microphone MI to speaker SP and is also used to indicate that signal X is being processed by a finite impulse response filter, which is assumed to represent the same acoustic path.

At the left bottom part of Fig. 4 two sound sources are depicted, producing background noise $TX_{noise}$ and speech of the user $TX_{speech}$ as present near the microphone MI. This same sound is also present near the speaker SP in a transformed way as a result of the acoustic path from the microphone MI to the speaker SP. Once this sound is traveled to the speaker SP, it is denoted with echo($TX_{noise} + TX_{speech}$)

Microphone MI picks up the background noise $TX_{noise}$ and the speech of the user $TX_{speech}$. The microphone MI further picks up part of the sound generated by the speaker SP: echo(RX - echo($TX_{speech} + TX_{noise}$)). This term will be explained in more detail below.

Thus, the microphone signal TX as detected by the microphone equals $TX_{speech} + TX_{noise}$ + echo(RX - echo($TX_{speech} + TX_{noise}$)) and is fed to the acoustic feedback subtracter SU. As will be explained further below, the acoustic feedback subtracter SU subtracts a signal from the microphone signal to cancel the acoustic feedback from the speaker SP to the microphone MI. The acoustic feedback subtracter SU subtracts a term equal to echo(RX - echo($TX_{speech} + TX_{noise}$)). This term will also be explained in more detail below.

The output of the acoustic feedback subtracter SU is therefore $TX_{speech} + TX_{noise}$ which is transmitted by the telephone device TD via the line interface LIF (not shown), and also inputted to the noise reduction finite impulse response filter FIR1. The noise reduction finite impulse response filter FIR1 represents the acoustic path from the microphone MI to the speaker SP and therefore outputs a signal equal to echo($TX_{speech} + TX_{noise}$).

The output of the noise reduction finite impulse response filter FIR1 (echo($TX_{speech} + TX_{noise}$)) is subtracted by noise reduction subtracter SU1 from the speaker signal RX as received by the telephone device TD, resulting in a signal equal to: RX- echo($TX_{speech} + TX_{noise}$), which is partially fed to the speaker SP and to the acoustic feedback finite impulse response filter FIR.

Based on the above, it can be seen that the acoustic feedback finite impulse response filter FIR receives RX - echo($TX_{speech}$ + $TX_{noise}$) as input. The acoustic feedback finite impulse response filter FIR is supposed to take into account the acoustic path from the speaker SP to the microphone MI and will therefore output a signal equal to echo(RX - echo($TX_{speech}$ + $TX_{noise}$)), which is fed to the acoustic feedback subtracter SU, as was already announced above.

The speaker SP also receives RX - echo($TX_{speech}$ + $TX_{noise}$) as input and generates an acoustic sound based on this signal. This clarifies the origin of the term echo(RX - echo($TX_{speech}$ + $TX_{noise}$) detected by the microphone M1, mentioned above.

As already explained above, the background noise $TX_{noise}$ and the speech $TX_{speech}$ as present near the microphone MI arrive at the speaker SP as echo($TX_{speech}$ + $TX_{noise}$). The resulting sound signal will therefore equal RX - echo($TX_{speech}$ + $TX_{noise}$) + echo($TX_{speech}$ + $TX_{noise}$) = RX.

Based on Fig. 4 and the above explanation, it will be understood that the background noise as present near the speaker SP (and the ear of the user) is at least partially cancelled by the embodiments described. Also, some of the speech sound generated by the user is cancelled. However, this does not influence the intelligibility, or may also be compensated for with standard side tone generator.

In the above embodiments it is assumed that the acoustic feedback finite impulse response filter FIR is trained, based on the fact that the microphone MI detects at least part of the sound as outputted by the speaker SP. Since the embodiments described above work when the telephone device is not used as a speaker phone, it is assumed that the microphone MI also detects some of the sound generated by the speaker SP even when the telephone device TD is not used as a speaker phone. Also, in a situation where background noise is present, a user may inclined to increase the volume level of the speaker SP. The training of the acoustic feedback finite impulse response filter FIR may take place during a certain training period. This training period may take place at the beginning of a telephone call and may for instance take a few seconds. The training period may also be repeated at regular intervals (e.g. during presence of Rxspeech).

According to an embodiment, during the training period the volume of the speaker SP may be set at a training level to allow the acoustic feedback finite impulse response filter FIR to be trained. By increasing the volume of the speaker SP, it is ensured that the microphone MI detects part of the sound emitted by the speaker SP.

According to a further embodiment a training signal may be used that is outputted by the speaker SP. This training signal may be relatively short (e.g. 1 or 2 seconds) and may for instance be a white noise signal or a colored noise signal. The training signal may be outputted at a relatively high volume. The volume of such a training signal may be chosen such that no clipping is caused. The volume of such a s training signal is speaker dependent.

A white noise signal is a random signal of every frequency in the certain frequency band, for instance the audio spectrum, all of which have an average uniform power level. The acoustic feedback finite impulse response filter FIR may be trained during the training signal, i.e. the acoustic feedback parameters $a_i$ of the acoustic feedback finite impulse response filter FIR (and thus the noise reduction parameters $b_i$ of the noise reduction finite impulse response filter FIR1) may be determined and set during the training signal.

The descriptions above are intended to be illustrative, not limiting. Thus, it will be apparent to one skilled in the art that modifications may be made to the invention as described without departing from the scope of the claims and their technical equivalents set out below.

## Claims

1. Telephone device (TD), comprising a processing unit (PU) arranged to
   receive a microphone signal (TX) from a microphone (MI) and a speaker signal (RX) from a line interface (LIF) and is arranged to
   transmit the microphone signal (TX) to the line interface (LIF) and the speaker signal (RX) to a speaker (SP),
   **characterized in that** the processing unit (PU) comprises a noise reduction finite impulse response filter (FIR1) and a noise reduction subtracter (SU1), the noise reduction finite impulse response filter (FIR1) being defined by a plurality of noise reduction parameters ($b_i$), wherein the processing unit (PU) is arranged to transmit the microphone signal (TX) to the line interface (LIF) and to the noise reduction finite impulse response filter (FIR1),
   wherein the output of the noise reduction finite impulse response filter (FIR1) is subtracted from the speaker signal (RX) as received from the line interface (LIF) by noise reduction subtracter (SU1) to cancel background noise present at the speaker (SP).

2. Telephone device (TD) according to claim 1, in which the output u(n) of the noise reduction finite impulse response filter (FIR1) at a time n, is the weighted sum of the input signal v(n) of the noise reduction finite impulse response filter (FIR1) at time n and a predetermined number of previous input signals at times n-1 to n-S, where the noise reductions parameters of the noise reduction finite impulse response filter (FIR1) are defined by weighing factors ($b_i$) of the noise reduction finite impulse response filter (FIR1) of the weighted sum and where S determines the order of the filter:

$$u(n) = \sum_{i=0}^{i=S} b_i v(n-i).$$

3. Telephone device (TD) according to any one of the preceding claims, in which the processing unit (PU) comprises an acoustic feedback finite impulse response filter (FIR) and an acoustic feedback subtracter (SU), the acoustic feedback finite impulse response filter (FIR) being defined by a plurality of acoustic feedback parameters ($a_i$),
wherein the processing unit (PU) is further arranged to transmit the output of the noise reduction subtracter (SU1) to the speaker (SP) and to the acoustic feedback finite impulse response filter (FIR), and wherein the output of the acoustic feedback finite impulse response filter (FIR) is subtracted from the microphone signal (TX) by acoustic feedback subtracter (SU) to cancel acoustic feedback from the speaker (SP) to the microphone (MI).

4. Telephone device (TD) according to claim 3, in which the output y(n) of the acoustic feedback finite impulse response filter (FIR) at a time n, is the weighted sum of the input signal x(n) of the acoustic feedback finite impulse response filter (FIR) at time n and a predetermined number of previous input signals at times n-1 to n-R, where the acoustic feedback parameters of the acoustic feedback finite impulse response filter (FIR) are defined by weighing factors ($a_i$) of the acoustic feedback finite impulse response filter (FIR) of the weighted sum and where R determines the order of the filter:

$$y(n) = \sum_{i=0}^{i=R} a_i x(n-i).$$

5. Telephone device (TD) according to any one of claims 3 - 4, in which part of the output of the acoustic feedback subtracter (SU) is fed back to the acoustic feedback finite impulse response filter (FIR) to adjust the acoustic feedback parameters ($a_i$) of the acoustic feedback finite impulse response filter (FIR).

6. Telephone device (TD) according to claim 5, in which the processing unit (PU) is arranged to adjust the acoustic feedback parameters ($a_i$) of the acoustic feedback finite impulse response filter (FIR) during a training period.

7. Telephone device (TD) according to claim 6, in which the processing unit (PU) is arranged to transmit a training signal to the speaker (SP) during the training period.

8. Telephone device (TD) according to claim 7, in which the training signal is a white noise signal.

9. Telephone device (TD) according to any one of the claims 6 - 8, in which the processing unit (PU) is arranged to set a volume of the speaker (SP) at a training level during the training period.

10. Telephone device (TD) according to any one of the claims 4 - 9, in which the noise reduction parameters ($b_i$) of the noise reduction finite impulse filter (FIR1) are a function of the acoustic feedback parameters ($a_i$) of the acoustic feedback finite impulse filter (FIR):

$$b_i = f(a_i).$$

11. Telephone device (TD) according to claim 10, in which the function f($a_i$) is one of f($a_i$) = $a_i$ or f($a_i$) = (1/ $a_i$).

12. Telephone device (TD) according to any one of the claims 4 - 11 wherein the order S of the noise reduction finite impulse response filter (FIR1) is equal to or less than the order R of the acoustic feedback finite impulse response filter (FIR): $S \leq R$.

## Fig 1

## Fig 2

# Fig 3

Fig 4

EP 1 930 878 A1

**European Patent Office**  **EUROPEAN SEARCH REPORT**

Application Number

EP 06 12 5565

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 903 726 B1 (DIGISONIX INC [US]) 24 November 2004 (2004-11-24) * figure 4 * | 1-9,12 | INV. G10K11/178 |
| A | * paragraph [0012]; figure 1 * | 10,11 | ADD. H04M9/08 |
| X | US 6 381 224 B1 (LANE JOHN EUGENE [US] ET AL) 30 April 2002 (2002-04-30) | 1-9,12 | |
| A | * abstract * * figure 1 * * column 3, lines 15-48 * | 10,11 | |

TECHNICAL FIELDS SEARCHED (IPC)

G10K
H04B
H04M

The present search report has been drawn up for all claims

| Place of search | Date of completion of the search | Examiner |
|---|---|---|
| Munich | 23 March 2007 | Täger, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 5565

This annex lists the patent family members relating to the patent documents cited in  the above-mentioned European search report.
The members are as contained in the European Patent Office EDP file on
The European Patent Office is in no way liable for these particulars which are merely given for the purpose of information.

23-03-2007

| Patent document cited in search report | | Publication date | Patent family member(s) | | Publication date |
|---|---|---|---|---|---|
| EP 0903726 | B1 | 24-11-2004 | CA | 2242510 A1 | 11-03-1999 |
| | | | DE | 69827731 D1 | 30-12-2004 |
| | | | DE | 69827731 T2 | 15-12-2005 |
| | | | EP | 0903726 A2 | 24-03-1999 |
| | | | US | 6496581 B1 | 17-12-2002 |
| US 6381224 | B1 | 30-04-2002 | NONE | | |

EPO FORM P0459

For more details about this annex : see Official Journal of the European Patent Office, No. 12/82